# EUROPÄISCHE PATENTSCHRIFT

(11) **EP 3 332 104 B1**
(45) Veröffentlichungstag und Bekanntmachung des Hinweises auf die Patenterteilung: **11.09.2019**
(21) Anmeldenummer: 16742163.5
(22) Anmeldetag: 15.07.2016
(51) Int. Cl.: F01N 3/20

(54) **REDUKTIONSMITTELDOSIERSYSTEM MIT MODULAREM AUFBAU**
REDUCTANT-METERING SYSTEM HAVING A MODULAR STRUCTURE
SYSTÈME DE DOSAGE D'UN AGENT DE RÉDUCTION, DE CONCEPTION MODULAIRE

(30) Priorität: 05.08.2015 DE 102015009958
(43) Veröffentlichungstag der Anmeldung: 13.06.2018
(73) Patentinhaber: Albonair GmbH, 44263 Dortmund (DE)
(72) Erfinder: HÜTHWOHL, Georg, 44229 Dortmund (DE)
(74) Vertreter: Patentanwaltskanzlei Methling
(86) Internationale Anmeldenummer: PCT/EP2016/001246
(87) Internationale Veröffentlichungsnummer: WO 2017/020994

(56) Entgegenhaltungen:
- EP-A2- 2 505 804
- DE-A1-102012 210 631

## Beschreibung

Reduktionsmitteldosiersystem zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über einen Saugstutzen aus dem Tank angesaugt und über einen Druckstutzen gefördert und über zumindest eine Düse in den Abgasstrom des Verbrennungsmotors eingeleitet wird, wobei das Dosiersystem eine Druckluftversorgung aufweist und das Reduktionsmittel mittels Druckluft außerhalb der Düse zerstäubt wird.

Derartige Reduktionsmitteldosiersysteme sind beispielsweise bekannt aus DE 10 2008 013 960 A1, DE 102009 016 810 A1 und DE 10 2009 040 111 A1.

Aus der DE 10 2012 210 631 A1 und der EP 2 505 804 A2 sind Reduktionsmitteldosiersysteme mit einer Mischkammer zur Aerosolaufbereitung bekannt.

Katalysatoren zur selektiven katalytischen Reduktion, sogenannte SCR-Katalysatoren (englisch: selective catalyic reduction, abgekürzt: SCR) werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel in das Abgassystem mit einer Dosiervorrichtung eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil insbesondere gemäß DIN 70070 eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion (englisch selective catalyic reduction, SCR) der Ausstoß von Stickoxyden um etwa 90 % reduziert.

Bei den bekannten Reduktionsmitteldosiersystemen zur Einspritzung eines Reduktionsmittels in den Abgasstrom eines Verbrennungsmotors zur selektiven katalytischen Reduktion ist es jedoch nachteilig, dass diese sehr viele einzelne Komponenten aufweisen, die aufwändig zu montieren sind und sehr viel Bauraum beanspruchen. Gerade im Kraftfahrzeugbau ist jedoch der verfügbare Bauraum ein stark beschränkender Parameter.

Die Aufgabe der Erfindung ist es daher, ein Reduktionsmitteldosiersystem der eingangs genannten Art derart weiter zu bilden, sodass eine weniger aufwändige Montage bei möglichst geringem Bauraumbedarf ermöglicht wird.

Diese Aufgabe wird erfindungsgemäß durch ein Reduktionsmitteldosiersystem gemäß Anspruch 1 gelöst. Vorteilhafte Weiterbildungen der Erfindung sind in den abhängigen Ansprüchen angegeben.

Besonders vorteilhaft bei dem Reduktionsmitteldosiersystem zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank über einen Saugstutzen aus dem Tank angesaugt und über einen Druckstutzen gefördert und über zumindest eine Düse in den Abgasstrom des Verbrennungsmotors eingeleitet wird, wobei das Dosiersystem eine Druckluftversorgung aufweist und das Reduktionsmittel mittels Druckluft außerhalb der Düse zerstäubt wird, ist es, dass das Reduktionsmitteldosiersystem einen modularen Aufbau aus zumindest zwei integrierten Baueinheiten aufweist, wobei die erste integrierte Baueinheit als Dosiereinheit ausgebildet ist und zumindest die Pumpe, den Saugstutzen, den Druckstutzen und einen Druckluftanschluss aufweist und wobei die zweite integrierte Baueinheit als Drucklufteinheit ausgebildet ist und zumindest ein gesteuertes Ventil zur Regelung der Druckluftversorgung aufweist.

Dadurch, dass das Reduktionsmitteldosiersystem einen modularen Aufbau aus zumindest zwei integrierten Baueinheiten aufweist, ist es möglich, die integrierten Baueinheiten zusammen oder getrennt voneinander an beliebiger Position in dem Kraftfahrzeug anzuordnen. Hierdurch wird der benötigte Bauraum verkleinert und es kann der vorhandene Bauraum optimal genutzt werden.

Jedes Modul weist eine Mehrzahl von einzelnen Bauteilen auf, die zusammen das Modul bilden. So ist eine erste integrierte Baueinheit als Dosiereinheit ausgebildet. Diese weist neben der Förderpumpe ferner zumindest den Saugstutzen, den Druckstutzen und einen Druckluftanschluss auf. Über den Druckluftanschluss wird der Dosiereinheit von der Drucklufteinheit Druckluft zugeleitet, die während des Dosierbetriebs der Zerstäubung des Reduktionsmittels außerhalb der Düse dient. Dadurch, dass die Zerstäubung des Reduktionsmittels außerhalb der Düse mittels der Druckluft erfolgt, kann auf die Anordnung einer Mischkammer verzichtet werden, wie dies bei vielen aus dem Stand der Technik bekannten Reduktionsmitteldosiersystemen zur Einspritzung eines Reduktionsmittels in den Abgasstrom eines Verbrennungsmotors zur selektiven katalytischen Reduktion bekannt ist. Durch den möglichen Verzicht auf eine derartige Mischkammer wird der benötigte Einbauraum für das erfindungsgemäße Reduktionsmitteldosiersystem weiter optimiert.

Die zweite integrierte Baueinheit ist als Drucklufteinheit ausgebildet und weist zumindest ein gesteuertes Ventil zur Regelung der Druckluftversorgung auf. Dieses gesteuerte Ventil kann dabei im Rahmen einer Steuerung angesteuert werden: Es besteht auch die Möglichkeit, dieses Ventil zur Regelung der Druckluft im Rahmen eines offenen oder geschlossenen Regelkreises zu regeln.

Mit dem Terminus der Regelung der Druckluft ist dabei insbesondere umfasst, die Dauer der Druckluftzufuhr und/oder die Taktung einer gepulsten Druckluftzufuhr und/oder den Massenstrom der Druckluftzufuhr und/oder den Druck der Druckluft zu steuern oder zu regeln.

Die einzelnen integrierten Baueinheiten weisen somit jeweils die für die einzelnen Baueinheiten benötigten Bauteile als integrale Bestandteile auf. Somit weist das Reduktionsmitteldosiersystem eine die Förderpumpe enthaltende Pumpeneinheit auf. Diese Pumpeneinheit kann zusätzlich zu der Förderpumpe weitere Bauteile, insbesondere Schaltventile und/oder Sensoren als integrale Bestandteile aufweisen.

Mit dem Begriff des Saugstutzens ist dabei insbesondere eine Förderleitung vom Reduktionsmitteltank zum Saugmund der Förderpumpe bezeichnet und/oder der Saugmund der Förderpumpe als solcher. Die Dosiereinheit kann insbesondere an einen Reduktionsmitteltank angeflanscht sein und/oder insbesondere in oder an dem Tank eingebaut sein. Bei Einbau direkt in den Tank kann dementsprechend eine gesonderte Förderleitung vom Tank zum Saugmund der Pumpe entfallen.

Mit dem Begriff des Druckstutzens ist dabei der druckseitige Anschluss der Förderpumpe gemeint, an welchen sich eine Förderleitung anschließt, über welche das Reduktionsmittel von der Pumpe zu der Düse gefördert wird.

Die Begriffe Reduktionsmitteldosiersystem bzw. Dosiersystem werden im Sinne der Erfindung synonym verwendet. Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt.

Kern der Erfindung ist somit die Aufteilung des Dosiersystems in zumindest zwei Module, welche jeweils als integrierte Baueinheiten ausgeführt sind. Das bedeutet, dass die Module ihre jeweiligen Bestandteile als integrale Bestandteile aufweisen. Die Module können als vormontierte Module platzsparend an beliebiger Stelle in dem Kraftfahrzeug montiert werden.

In einer bevorzugten Ausführungsform ist in die Dosiereinheit ferner zumindest ein Drucksensor zur Erfassung des Reduktionsmitteldruckes und/oder ein Temperatursensor zur Erfassung der Reduktionsmitteltemperatur und/oder ein Durchflusssensor integriert.

Durch eine Integration eines oder mehrerer Sensoren kann somit die für die Betriebsüberwachung und/oder Regelung des Dosiersystems benötigte Sensorik in die Dosiereinheit integriert werden, die als vormontierte Einheit in das Fahrzeug an der gewünschten Stelle eingebaut werden kann.

Vorzugsweise wird der Druck stromab der Förderpumpe mittels eines Drucksensors erfasst und überwacht. Durch eine derartige Erfassung und Überwachung des Druckes in der Reduktionsmittel führenden Druckleitung zur Düse kann auch die korrekte Arbeitsweise der Förderpumpe und die Dosierung kontinuierlich überwacht werden.

Besonders bevorzugt weisen die Baueinheiten jeweils ein Gehäuse auf, welche die jeweiligen Anschlussbereiche sowie Montagebereiche aufweisen, insbesondere dass die Gehäuse jeweils einstückig als Spritzgussteile ausgeführt sind.

Vorzugsweise sind somit die einzelnen Bestandteile einer jeden Baueinheit oder eines jeden Moduls mit einem ein Gehäuse bildenden Kunststoff umspritzt. Dabei können die als Spritzgussteile ausgebildeten Gehäuse jeweils angespritzte Montagebereiche sowie die benötigten Anschlussbereiche aufweisen. Die Dosiereinheit weist bevorzugt integrierte Anschlüsse zur Kopplung mit dem Tank, der Düse sowie einen Druckluftanschluss auf. Vorzugsweise bilden die Gehäuse einen Spritzwasserschutz für die integrierten Baueinheiten und/oder sind frostsicher ausgeführt.

Die Herstellung der Baueinheiten erfolgt bevorzugt dergestalt, dass die einzelnen Bauteile bereitgestellt und vormontiert werden. Anschließend werden die vormontierten Bauteile in eine Spritzgussform eingesetzt und mit Kunststoff dichtend umspritzt, um spritzwassergeschützte Gehäuse zur Montage in einem Kraftfahrzeug auszubilden. Die Spritzgussformen sind ferner vorzugsweise so ausgestaltet, dass sowohl Montagebereiche als auch Anschlussbereiche während des Spritzgießens einstückig mit dem Gehäuse gebildet werden.

In einer bevorzugten Ausführungsform weist das System einen Reduktionsmitteltank auf, an welchen der Saugstutzen angeschlossen ist. Alternativ oder kumulativ kann die Dosiereinheit in den Tank eingebaut und/oder an den Tank angeflanscht sein, insbesondere kann die Dosiereinheit ein frostdrucksicheres Gehäuse aufweisen.

Die Dosiereinheit kann somit mittelbar oder unmittelbar an den Tank angeflanscht und/oder in den Tank eingebaut sein. Bevorzugt ist das Gehäuse der Dosiereinheit dergestalt ausgeführt, dass ein möglicherweise in dem Tank auftretender Frostdruck von dem Gehäuse der Dosiereinheit aufgenommen werden kann, ohne dass es zu einer Beschädigung der Dosiereinheit kommt. Das bedeutet, dass das Gehäuse der Dosiereinheit einen im Tank möglicherweise auftretenden Frostdruck unbeschadet aufnimmt.

Vorzugsweise ist die Dosiereinheit mit der Pumpe beispielsweise mittels einer Steckverbindung und/oder mittels eines Bajonettverschlusses unmittelbar an den Reduktionsmitteltank angeflanscht. Ein besonderer Vorteil der erfindungsgemäßen Ausführung eines Dosiersystems bestehend aus zumindest zwei integrierten Baueinheiten besteht somit darin, dass ein zusätzlicher Saugschlauch bei dieser Ausführungsform entfallen kann. Hierdurch wird die Anzahl der benötigten Bauteile reduziert. Ferner wird die Frostsicherheit des gesamten Systems erhöht, wenn auf eine zusätzliche Schlauchverbindung zwischen Tank und Dosiereinheit verzichtet werden kann.

In einer bevorzugten Ausführungsform weist die Drucklufteinheit ein Schaltventil und/oder ein Druckregelventil und/oder einen insbesondere geregelten Kompressor und/oder einen Luftfilter auf.

Mittels eines Kompressors, insbesondere mittels eines geregelten Kompressors kann die benötigte Druckluft bereitgestellt werden. Alternativ oder kumulativ kann die Drucklufteinheit von einer fahrzeugseitig bereitgestellten Druckluftversorgung gespeist werden. Durch die Anordnung eines Schaltventils und/oder eines Druckregelventils und/oder eines insbesondere geregelten Kompressors kann der benötigte Druckluftmassenstrom sowie der benötigte Luftdruck eingeregelt und bereitgestellt werden. Vorzugsweise weist die Drucklufteinheit einen Luftfilter auf. Hierdurch kann die gewünschte Reinheit und Partikelfreiheit der Druckluft gewährleistet werden.

Das erfindungsgemäße System weist eine zweite integrierte Baueinheit in Form einer Drucklufteinheit auf, die der Bereitstellung 'von Druckluft in der benötigten Menge pro Zeiteinheit bei dem gewünschten Luftdruck dient. Das Reduktionsmittel wird außerhalb der Düse mittels Druckluft zerstäubt. Dabei kann die Druckluftversorgung ein Schaltventil und/oder ein Druckregelventil aufweisen. Dieses Schaltventil dient der Steuerung, d. h. der Ein- und Abschaltung der Druckluftversorgung für das gesamte oder einen Teil des Dosiersystems.

Alternativ oder kumulativ kann die Drucklufteinheit ein Druckregelventil aufweisen. Hierdurch kann die Druckluft auf ein zur Zerstäubung des Reduktionsmittels mittels Druckluft gewünschtes Druckniveau eingestellt werden. Die Druckluft selbst kann aus einem fahrzeugeigenen Druckluftsystem, beispielsweise eines Nutzfahrzeuges, in dessen Abgastrakt das Dosiersystem angeordnet ist, entnommen werden, ohne dass der in dem Druckluftsystem vorherrschende Systemdruck eine Einschränkung darstellt, da der Druck der Druckluft auf den gewünschten Druck abgesenkt werden kann. Alternativ oder kumulativ kann die Drucklufteinheit einen Kompressor zur Bereitstellung der Druckluft aufweisen.

In einer bevorzugten Ausführungsform weist der Druckluftanschluss der Dosiereinheit ein Magnetventil und/oder ein Rückschlagventil auf. Durch Schaltung eines solchen Magnetventils und/oder Beaufschlagung eines mit einem Rückschlagventil ausgestalteten Druckluftanschlusses der Dosiereinheit kann die Dosiereinheit inklusive der Reduktionsmittel führenden Leitungen und der Düse nach Beendigung der Dosierung mittels Druckluft gespült werden, um Ablagerungen und Verstopfungen beispielsweise durch Kristallisation vorzubeugen. Die Druckluft kann somit kumulativ zur Zerstäubung des Reduktionsmittels im Abgasstrang und zur Reinigung der Reduktionsmittel führenden Leitungen nach Beendigung der Dosierung genutzt werden.

Es ist somit bei dem installierten Reduktionsmitteldosiersystem die Dosiereinheit über den Druckluftanschluss vorzugsweise über ein Schaltventil oder Regelventil an die Drucklufteinheit angeschlossen, um die Dosiereinheit und die Düse nach Beendigung der Dosierung mittels Druckluft von Reduktionsmittel zu befreien.

Hierdurch können die Reduktionsmittel fördernde Leitung und die Düse nach Beendigung der Dosierung mittels der Druckluft von der Reduktionsmittellösung befreit werden, um ein Einfrieren oder Auskristallisieren der Reduktionsmittellösung zu verhindern. Hierdurch kann Frostschäden und Verstopfungen effektiv vorgebeugt werden.

Vorzugsweise weist die Dosiereinheit zumindest einen Reduktionsmittelfilter auf. Hierdurch ist es gewährleistet, die Reduktionsmittellösung in der gewünschten Qualität und Reinheit bereitzustellen, um Verstopfungen von Leitungen oder der Düse vorzubeugen.

Bei der Düse handelt es sich um eine außen mischende Zweistoffdüse. Vorzugsweise tritt dabei aus zumindest einer ersten Öffnung Reduktionsmittel aus und aus zumindest einer zweiten Öffnung Druckluft, wobei die zweite Öffnung derart positioniert, insbesondere unter einem Winkel gegenüber der Strahlrichtung der ersten Öffnung angestellt ist, dass mittels der aus der zweiten Öffnung austretenden Druckluft das aus der ersten Öffnung austretende Reduktionsmittel zerstäubt wird. Durch die strömungsoptimierte Anordnung der Düsenöffnungen wird die Aerosolbildung außerhalb der Düse unmittelbar im Abgasstrang des Verbrennungsmotors verbessert.

Bei der Förderpumpe der Dosiereinheit handelt es sich vorzugsweise um eine Inline-Pumpe. Bei der Inline-Pumpe handelt es sich um eine Sonderform der Kolbenpumpe in Form einer Doppelkolbenpumpe, bei der zwei Kolben in einer Hülse betrieben werden. Der mittels einer Spule magnetisch angetriebene Druckkolben fördert das durch den Saugstutzen in die Pumpe eingetretene Reduktionsmittel in einer Vorwärtsbewegung mittels Gegendruck eines Steuerkolbens über den Druckstutzen zur Düse. Eine solche Pumpe, bei welcher der Kolben mittels einer Spule magnetisch angetrieben wird, wird auch als Magnetkolbenpumpe bezeichnet.

Bei einer solchen Magnetkolbenpumpe sind eine oder mehrere Zylinderspulen, mittels derer ein Magnetfeld erzeugt wird, angeordnet. Die Kolbenbewegung des magnetischen Kolbens wird durch das mittels der Spulen erzeugte Magnetfeld gesteuert. Bei einer Magnetkolbenpumpe ist es besonders vorteilhaft, dass diese durch eine entsprechende Ansteuerung der das Magnetfeld erzeugenden Spulen, exakt betätigt und angesteuert werden kann.

Mit dem Begriff der Ansteuerung des/der Zylinderspule/n ist dabei die zeitlich variable Bestromung der Spule/n gemeint, durch die jeweils ein resultierendes Magnetfeld erzeugt wird, welches eine resultierende Kraft auf den magnetischen Kolben ausübt. Durch die resultierende magnetische Kraft wird der Kolben in dem Zylinder der Magnetkolbenpumpe zwischen dem oberen Totpunkt und dem unteren Totpunkt hin- und herbewegt und dabei beschleunigt oder abgebremst.

Die Ansteuerung der Spule/n kann pulsweitenmoduliert erfolgen. Durch eine pulsweitenmodulierte Ansteuerung des/der Zylinderspule/n wird das Tastverhältnis, d.h. der Quotient von Einschaltdauer zu Ausschaltdauer der Bestromung des/der Zylinderspule/n während eines Zyklus, variiert, woraus ein zeitlich veränderliches resultierendes Magnetfeld des/der Zylinderspule/n resultiert. Hieraus folgt wiederum eine zeitlich variierende auf den Kolben wirkende resultierende magnetische Kraft und der daraus resultierenden variablen Kolbenbeschleunigung bzw. Kolbengeschwindigkeit. Durch Variation des Tastgrades lässt sich der arithmetische Mittelwert der elektrischen Spannung ändern. Dementsprechend kann durch eine pulsweitenmodulierte Ansteuerung der Zylinderspule/n einer Magnetkolbenpumpe die resultierende auf den Kolben einwirkende magnetische Kraft gesteuert werden.

Vorzugsweise weist das System eine Beheizungseinrichtung zur Beheizung der Reduktionsmittellösung auf. Die vielfach eingesetzte Reduktionsmittellösung gemäß DIN 70070 gefriert aufgrund ihres Wassergehaltes bei ca. -11°C. Daher ist es vorteilhaft, eine Beheizungseinrichtung beispielsweise innerhalb des Tanks und/oder in thermischer Kopplung zur Dosiereinheit zur Beheizung der Reduktionsmittellösung für den Fall sehr niedriger Umgebungstemperaturen vorzusehen.

Zur Beheizung der Pumpe und/oder des Tanks kann alternativ oder kumulativ die Abwärme des/der Magnetspule/n genutzt werden. Es können ein oder mehrere Wärmeleitbleche angeordnet sein, mittels dessen/derer die Magnetspule/n und die Pumpe thermisch gekoppelt sind. Über ein solches oder mehrerer solcher Wärmeleitblech/e kann die Abwärme der Magnetspule/n zur Pumpe geleitet und zur Beheizung der Pumpe genutzt werden. Ferner ist es möglich, durch einen absichtlich ineffizienten Betrieb die Erzeugung von Abwärme zu steigern. Dies kann beispielsweise durch hohe Frequenzen bei der Ansteuerung der Magnetspule/n durch eine gezielte pulsweitenmodulierte Ansteuerung erfolgen.

Alternativ oder kumulativ können ein oder mehrere PTC-Widerstände angeordnet sein, mittels derer die Pumpe und/oder der Tank beheizt werden kann. Weiter kann alternativ oder kumulativ eine Beheizung der Pumpe und/oder des Tanks mittels des Kühlwassers aus dem Kühlwasserkreislauf des Kraftfahrzeuges erfolgen. Hierzu können entsprechende thermische Verbindungselemente angeordnet sein. Mittels solcher thermischen Verbindungselemente kann die Wärmeenergie aus dem Kühlwasser des Kühlwasserkreislaufs des Kraftfahrzeuges auf die Pumpe und/oder den Tank und insbesondere den Tankinhalt geleitet werden, um ein Gefrieren der Reduktionsmittellösung zu verhindern.

In einer bevorzugten Ausführungsform weist die Dosiereinheit einen Sensor, insbesondere einen Piezokristall, zur Erfassung des Kolbenaufschlags des Pumpenkolbens auf.

Mittels eines derartigen Sensors wie beispielsweise eines Piezokristalls zur Erfassung des Kolbenaufschlags des Pumpenkolbens kann der Kolbenaufschlag der Pumpe detektiert werden. Vorzugsweise ist in dem Kraftfahrzeug ein Onboard-Diagnosesystem vorgesehen. Für dieses Onboard-Diagnosesystem kann somit der Kolbenaufschlag der Pumpe mittels eines solchen Sensors detektiert werden. Durch eine entsprechende Auswertung des Sensorsignals mittels einer entsprechenden Auswerteeinheit kann mittels eines solchen Sensors eine Unterscheidung erfolgen, ob Luft oder Reduktionsmittellösung mittels der Pumpe gefördert wurde. Dies kann zum einen aus dem Zeitintervall zwischen Ansteuerung und erfolgtem Kolbenanschlag und zum anderen aus der Intensität des Klopfgeräusches des anschlagenden Kolbens geschlossen werden. Dementsprechend kann eine entsprechende Auswerteeinheit zur Auswertung des Sensorsignals vorgesehen sein.

Ein solcher beispielsweise als Piezokristall ausgebildeter Sensor wird somit quasi als Klopfsensor zur Erfassung des Zeitpunktes und der Intensität des Kolbenaufschlags der Pumpe eingesetzt und dient der Betriebsüberwachung des Dosiersystems insbesondere hinsichtlich der Unterscheidung, ob Luft oder Reduktionsmittellösung gefördert wird.

Vorzugsweise weist die Dosiereinheit ein integriertes Steuergerät auf. Insbesondere kann die Dosiereinheit einen CanBus-Anschluss aufweisen.

In einer bevorzugten Ausführungsform weist die Drucklufteinheit ein integriertes Steuergerät auf. Insbesondere kann die Drucklufteinheit einen CanBus-Anschluss aufweisen.

Durch die Integration eines Steuergerätes in die Dosiereinheit und/oder die Drucklufteinheit kann die für die Steuerung und den Betrieb der Dosiereinheit und/oder der Drucklufteinheit benötigte Elektronik integriert werden, insbesondere in das Kunststoffgehäuse der Dosiereinheit und/oder in das Kunststoffgehäuse der Drucklufteinheit mit eingespritzt werden. Durch Anordnung eines CanBus Anschlusses an der Dosiereinheit und/oder an der Drucklufteinheit kann auf einfache Weise eine Einbindung der Dosiereinheit und/oder der Drucklufteinheit in ein Steuersystem des Kraftfahrzeuges erfolgen.

Vorzugsweise ist ein NOₓ-Sensor im Abgasstrang stromab der Reduktionsmitteleinspritzung vorgesehen. Mittels eines derartigen NOₓ-Sensors im Abgasstrang stromab der Reduktionsmitteleinspritzung kann die Qualität der selektiven katalytischen Reduktion überwacht werden und insbesondere kann der Messwert dieses NOₓ-Sensors zur Ansteuerung des Dosiersystems und zur Regelung des zeitlichen Verlaufs der Dosiermenge verwendet werden. Dies bedeutet, dass mittels eines solchen NOₓ-Sensors im Abgasstrang stromab der Reduktionsmitteleinspritzung ein geschlossener Regelkreis zur Regelung der Dosiereinheit und/oder der Drucklufteinheit, insbesondere des gesamten Dosiersystems realisiert wird.

In einer weiteren bevorzugten Ausführungsform weist das Dosiersystem einen Qualitätssensor zur Überwachung der Reduktionsmittellösung auf. Mittels eines derartigen Qualitätssensors kann überwacht werden, dass tatsächlich Reduktionsmittellösung in dem Tank befindlich ist und mittels des Dosiersystems gefördert wird, und nicht etwa pures Wasser oder dergleichen. Ein solcher Qualitätssensor kann darauf basieren, dass der elektrische Widerstand der geförderten Flüssigkeit gemessen wird. Alternativ oder kumulativ kann eine Messung der Schallgeschwindigkeit innerhalb der geförderten Flüssigkeit erfolgen.

Ein solcher Qualitätssensor kann insbesondere in dem Tank angeordnet sein, in welchem die Reduktionsmittellösung bevorratet wird.

Zwei Ausführungsbeispiele der Erfindung sind in den Figuren dargestellt und werden nachfolgend näher erläutert. Es zeigen:
- Fig. 1: eine schematische Darstellung eines Reduktionsmitteldosiersystems;
- Fig. 2: eine schematische Darstellung der Dosiereinheit und der Drucklufteinheit einer ersten Ausführungsform eines Reduktionsmitteldosiersystems;
- Fig. 3: eine schematische Darstellung einer Dosiereinheit und einer Drucklufteinheit einer zweiten Ausführungsform eines Dosiersystems.

In den Figuren sind identische Bauteile mit identischen Bezugszeichen versehen.

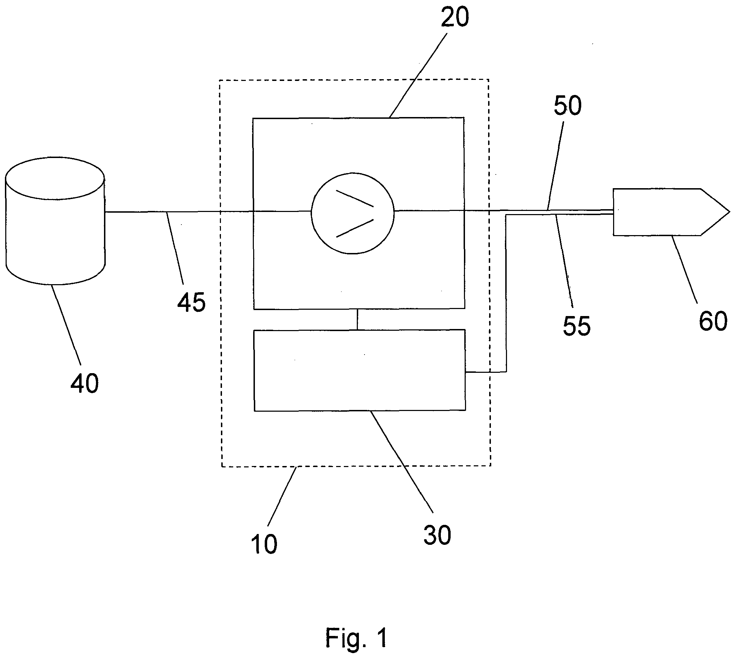

Fig. 1 zeigt eine schematische Darstellung des Reduktionsmitteldosiersystems 10 zur Einspritzung eines Reduktionsmittels in den Abgasstrom eines nicht dargestellten Verbrennungsmotors zur selektiven katalytischen Reduktion. Mittels der Dosiereinheit 20 wird über die Saugleitung 45 Reduktionsmittellösung aus dem Tank 40 angesaugt und über die Druckleitung 50 zur Einspritzdüse 60 gefördert. Ferner weist das Reduktionsmitteldosiersystem 10 eine Drucklufteinheit 30 auf, mittels derer die für die Aerosolbildung benötigte Druckluft bereitgestellt wird. Über die Einspritzdüse 60 wird das Reduktionsmittel in den Abgasstrom des Verbrennungsmotors eingespritzt. Die Aerosolbildung erfolgt außerhalb der Düse 60 mittels der über die Druckluftleitung 55 geförderten Druckluft. Die Darstellung der Verbindungsleitungen ist rein schematisch. Insbesondere kann die Dosiereinheit 20 unmittelbar an dem Tank 40 angeflanscht sein.

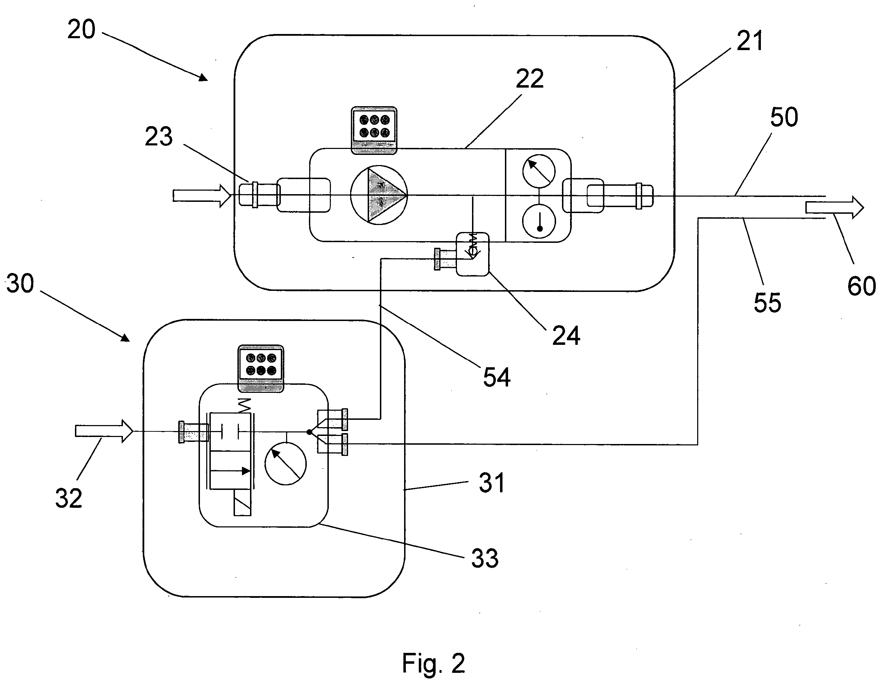

Fig. 2 zeigt eine schematische Darstellung einer ersten Ausführungsform eines Reduktionsmitteldosiersystems 10 mit den beiden Funktionseinheiten in Form der Dosiereinheit 20 sowie der Drucklufteinheit 30.

Die Dosiereinheit 20 weist ein Kunststoffgehäuse 21 auf, in welchem die Förderpumpe 22 angeordnet ist. Über den integrierten Flansch 23 erfolgt der unmittelbare Anschluss der Dosiereinheit 20 an den in der Fig. 2 nicht dargestellten Tank 40, in welchem die Reduktionsmittellösung bevorratet wird.

Bei der Förderpumpe 22 handelt es sich um eine Inlinepumpe, bei der der Kolben mittels des Magnetfeldes einer Spule betätigt wird. Ferner sind in das Kunststoffgehäuse 21 ein Drucksensor zur Überwachung des Förderdrucks der Reduktionsmittellösung sowie ein Temperatursensor zur Erfassung der Temperatur der geförderten Reduktionsmittellösung integriert.

Ferner verfügt das Gehäuse 21 über entsprechende Montagebereiche, welche direkt an das Gehäuse 21 mit angespritzt sind, so dass die Dosiereinheit 20 auf einfache Art und Weise in dem Kraftfahrzeug montiert werden kann. Sämtliche Bauteile der Dosiereinheit 20 werden positioniert und vormontiert und sodann mit Kunststoff umspritzt, sodass durch diesen Spritzgießvorgang das Gehäuse 21 mit den darin angeordneten Bauteilen ausgebildet wird. Das Gehäuse weist weiter Montagebereiche an seiner Außenseite auf, mittels derer die komplette Dosiereinheit 20 als integrierte Baueinheit in dem Fahrzeug an der hierfür vorgesehenen Position montiert werden kann. Die Reduktionsmittellösung wird von der Dosiereinheit 20 über die Druckleitung 50 zur Düse 60 geleitet.

Ferner weist das in Fig. 2 dargestellte Dosiersystem eine Drucklufteinheit 30 auf, bei der ebenfalls ein Kunststoffgehäuse 31 vorgesehen ist, in welchem die für die Druckluftversorgung benötigten Bauteile integriert sind.

Das Kunststoffgehäuse 31 der Drucklufteinheit 30 verfügt über einen entsprechenden Anschluss 32, wie er durch den Pfeil angedeutet ist. Dieser Anschluss 32 ist an ein Druckluftsystem des Kraftfahrzeuges angeschlossen. Das heißt bei dem in Fig. 2 dargestellten Ausführungsbeispiel des Dosiersystems wird die benötigte Druckluft von einem kraftfahrzeugseitig vorgesehenen Druckluftsystem bereit gestellt. Ferner weist die Drucklufteinheit 30 ein Druckregelventil 33 auf sowie zwei Ausgänge 54, 55.

Sämtliche Bauteile der Drucklufteinheit 30 werden positioniert und vormontiert und sodann mit Kunststoff umspritzt, sodass durch diesen Spritzgießvorgang das Gehäuse 31 mit den darin angeordneten Bauteilen ausgebildet wird. Das Gehäuse weist weiter Montagebereiche an seiner Außenseite auf, mittels derer die komplette Drucklufteinheit 30 als integrierte Baueinheit in dem Fahrzeug an der hierfür vorgesehenen Position montiert werden kann.

Während des Förderbetriebs der Dosiereinheit 20 wird über den Ausgang 55 die zur Aerosolbildung benötigte Druckluft zur außenmischenden Zweistoffdüse 60 geleitet.

Die Aerosolbildung erfolgt dabei außerhalb der Zweistoffdüse 60 dadurch, dass über zumindest eine erste Düsenöffnung der Düse 60 die über die Druckleitung 50 zugeführte Reduktionsmittellösung in den Abgastrakt eingespritzt wird. Über eine oder mehrere zweite Düsenöffnungen in der Düse 60 wird die über die Druckluftleitung 55 zugeführte Druckluft ebenfalls in den Abgastrakt eingeleitet, sodass die Reduktionsmittellösung außerhalb der Düse 60 mittels der Druckluft zerstäubt wird. Hierzu sind die zweiten Düsenöffnungen entsprechend angestellt und auf den Strahl der aus der Düse 60 austretenden Reduktionsmittellösung gerichtet.

Durch die Aerosolbildung außerhalb der Düse 60 kann somit auf die Anordnung einer Mischkammer verzichtet werden.

Ferner verfügt die Dosiereinheit 30 über einen zweiten Druckluftausgang 54, der ebenfalls über das Steuer- und Regelventil 33 mit Druckluft beschickt werden kann. Diese Druckluftleitung 54 mündet in einen Eingang zur Zufuhr von Druckluft der Dosiereinheit 20. Dieser Eingang weist ein Rückschlagventil 24 auf. Nach Beendigung der Dosierung mittels der Dosiereinheit 20 wird der zweite Ausgang 54 der Drucklufteinheit 30 mit Druckluft beaufschlagt, so dass das Rückschlagventil 24 der Dosiereinheit automatisch öffnet.

Hierdurch kann mittels Druckluft die Pumpe 22 sowie die Förderleitung 50 einschließlich der Düse 60 von Reduktionsmittellösung befreit werden, so dass sowohl ein Auskristallisieren verbliebener Reduktionsmittellösung als auch ein Gefrieren von Reduktionsmittellösung innerhalb der Dosiereinheit 20 sowie der Förderleitung 50 und der Düse 60 verhindert werden kann.

Über diese zweite Druckluftleitung 54 und das Rückschlagventil 24 erfolgt somit nach Beendigung der Dosierung ein Spülen der Dosiereinheit 20 mittels Druckluft.

Dadurch, dass die Dosiereinheit 20 und die Drucklufteinheit 30 in getrennten modularen Einheiten untergebracht ist, kann das gesamte Dosiersystem in vorteilhafter Weise an beliebigen Stellen des Kraftfahrzeuges positioniert und eingebaut werden. Hierdurch wird die Montage der vormontierten Baugruppen ebenso erleichtert, wie die Anordnung innerhalb des Kraftfahrzeuges bei begrenztem Bauraum.

Die Gehäuse 21, 31 weisen hierzu entsprechende Montagebereiche auf, die unmittelbar an die Kunststoffgehäuse 21, 31 angespritzt sind.

Ferner ist in die jeweiligen modularen Einheiten ein Steuergerät zur Ansteuerung der verbauten Bauteile integriert. Daher weisen sowohl die Dosiereinheit 20 als auch die Drucklufteinheit 30 lediglich einen einzigen CanBus Anschluss auf, über den sowohl die Dosiereinheit 20 als auch die Drucklufteinheit 30 mit dem Kraftfahrzeugsteuergerät gekoppelt werden kann.

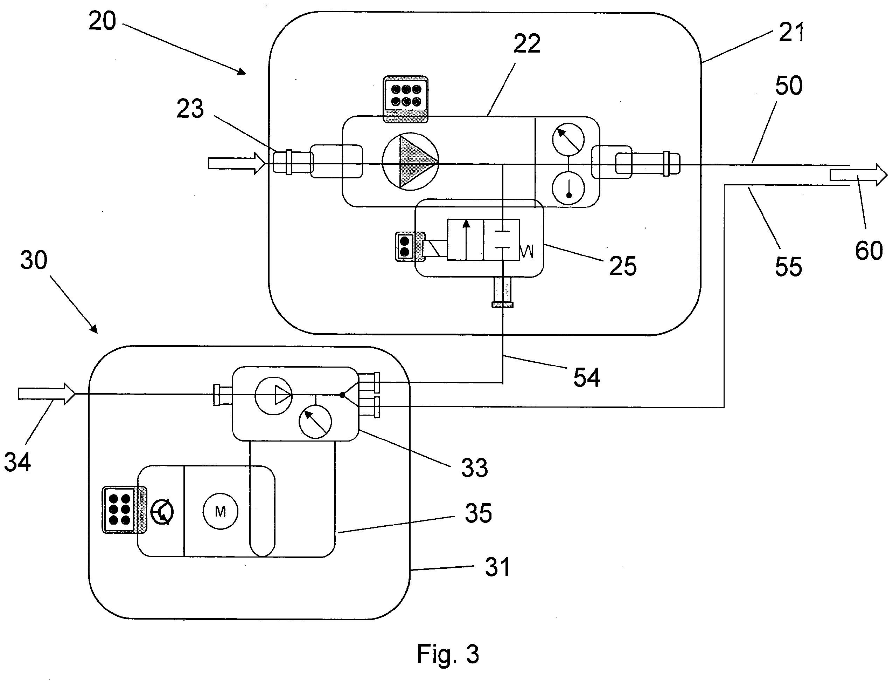

Fig. 3 zeigt eine schematische Darstellung einer zweiten Ausführungsform eines Dosiersystems. Dieses unterscheidet sich von der ersten Ausführungsform dadurch, dass die Dosiereinheit 20 auf der Drucklufteingangsseite ein Magnetventil 25 aufweist. Über dieses Magnetventil 25 ist es bei dieser Ausführungsform möglich, die Pumpe 22, die Förderleitung 50 sowie die Düse 60 nach Beendigung der Dosierung mittels Druckluft zu spülen und von Reduktionsmittellösung zu befreien. Die Dosiereinheit 20 wird wiederum über den Flansch 23 unmittelbar an den in der Fig. 3 nicht dargestellten Tank angeflanscht.

Ein weiterer Unterschied dieser zweiten Ausführungsform gemäß Fig. 3 gegenüber der ersten Ausführungsform gemäß Fig. 2 besteht darin, dass die Drucklufteinheit 30 bei dieser zweiten Ausführungsform gemäß Fig. 3 einen integrierten Kompressor 35 zur Bereitstellung der für die Zerstäubung des Reduktionsmittels bzw. das Spülen der Dosiereinheit 20 benötigten Druckluft aufweist. Eingangsseitig weist die Drucklufteinheit einen Luftfilter 34 auf. Über den Luftfilter 34 wird Umgebungsluft angesaugt und mittels des Kompressors 35 verdichtet.

Die Druckregelung sowie die Belegung der beiden Druckluftleitungen 54, 55 auf der Ausgangsseite der Drucklufteinheit 30 erfolgt mittels des hierzu vorgesehenen Regelventils 33 der Drucklufteinheit 30.

Während des Förderbetriebs der Dosiereinheit 20 wird über den Ausgang 55 die zur Aerosolbildung benötigte Druckluft zur außenmischenden Zweistoffdüse 60 geleitet.

Die Aerosolbildung erfolgt dabei wiederum außerhalb der Zweistoffdüse 60 dadurch, dass über zumindest eine erste Düsenöffnung der Düse 60 die über die Druckleitung 50 zugeführte Reduktionsmittellösung in den Abgastrakt eingespritzt wird. Über eine oder mehrere zweite Düsenöffnungen in der Düse 60 wird die über die Druckluftleitung 55 zugeführte Druckluft ebenfalls in den Abgastrakt eingeleitet, sodass die Reduktionsmittellösung außerhalb der Düse 60 mittels der Druckluft zerstäubt wird. Hierzu sind die zweiten Düsenöffnungen entsprechend angestellt und auf den Strahl der aus der Düse 60 austretenden Reduktionsmittellösung gerichtet.

Durch die Aerosolbildung außerhalb der Düse 60 kann somit auf die Anordnung einer Mischkammer verzichtet werden.

Ferner verfügt die Dosiereinheit 30 über einen zweiten Druckluftausgang 54, der ebenfalls über das Steuer- und Regelventil 33 mit Druckluft beschickt werden kann. Diese Druckluftleitung 54 mündet in einen Eingang zur Zufuhr von Druckluft der Dosiereinheit 20. Dieser Eingang weist ein Magnetventil 25 auf. Nach Beendigung der Dosierung mittels der Dosiereinheit 20 wird der zweite Ausgang 54 der Drucklufteinheit 30 mit Druckluft beaufschlagt und das Magnetventil 25 der Dosiereinheit geöffnet. Hierdurch kann die Pumpe 22, die Förderleitung 50 sowie die Düse 60 mittels Druckluft gespült und von Reduktionsmittelösung befreit werden.

Über diese zweite Druckluftleitung 54 und das schaltbare Magnetventil 25 erfolgt somit nach Beendigung der Dosierung ein Spülen der Dosiereinheit 20 mittels Druckluft.

## Patentansprüche

1. Reduktionsmitteldosiersystem (10) zur Einspritzung eines Reduktionsmittels in den Abgasstrom eines Verbrennungsmotors zur selektiven katalytischen Reduktion, mit einer Förderpumpe, mittels derer Reduktionsmittel aus einem Reduktionsmitteltank (40) über einen Saugstutzen (23) aus dem Tank (40) angesaugt und über einen Druckstutzen (50) gefördert und über zumindest eine Düse (60) in den Abgasstrom des Verbrennungsmotors eingeleitet wird, wobei das Dosiersystem (10) eine Druckluftversorgung aufweist und das Reduktionsmittel mittels Druckluft außerhalb der Düse (60) zerstäubt wird, **dadurch gekennzeichnet, dass** das Reduktionsmitteldosiersystem (10) einen modularen Aufbau aus zumindest zwei integrierten Baueinheiten (20, 30) aufweist, wobei die erste integrierte Baueinheit als Dosiereinheit (20) ausgebildet ist und zumindest die Pumpe, den Saugstutzen, den Druckstutzen und einen Druckluftanschluss aufweist und wobei die zweite integrierte Baueinheit als Drucklufteinheit (30) ausgebildet ist und zumindest ein gesteuertes Ventil zur Regelung der Druckluftversorgung aufweist, **dadurch gekennzeichnet, dass** der Druckluftanschluss Dosiereinheit (20) ein Magnetventil (25) und/oder ein Rückschlagventil (24) aufweist, insbesondere dass die Dosiereinheit (20) über ein Schaltventil oder Regelventil an die Drucklufteinheit (30) angeschlossen ist, um die Dosiereinheit (20) und/oder die Düse (60), insbesondere die Pumpe (22), die Förderleitung (50) und die Düse nach Beendigung der Dosierung mittels Druckluft von Reduktionsmittel zu befreien.

2. Dosiersystem (10) nach Anspruch 1, **dadurch gekennzeichnet, dass** in die Dosiereinheit (20) ferner zumindest ein Drucksensor zur Erfassung des Reduktionsmitteldruckes und/oder ein Temperatursensor zur Erfassung der Reduktionsmitteltemperatur und/oder ein Durchflusssensor integriert ist

3. Dosiersystem (10) nach Anspruch 1 oder 2, **dadurch gekennzeichnet, dass** die Baueinheiten (20, 30) jeweils ein Gehäuse (21, 31) aufweisen, welche die jeweiligen Anschlussbereiche sowie Montagebereiche aufweisen, insbesondere dass die Gehäuse (21, 31) jeweils einstückig als Spritzgussteile ausgeführt sind.

4. Dosiersystem (10) nach einem der vorherigen Ansprüche, **dadurch gekennzeichnet, dass** das Dosiersystem (10) einen Reduktionsmitteltank (40) aufweist, an welchen der Saugstutzen (23) angeschlossen ist.

5. Dosiersystem (10) nach einem der vorherigen Ansprüche, **dadurch gekennzeichnet, dass** das Dosiersystem (10) einen Reduktionsmitteltank (40) aufweist und die Dosiereinheit (20) in den Tank (40) eingebaut und/oder an den Tank (40) angeflanscht ist, insbesondere dass die Dosiereinheit (20) ein frostdrucksicheres Gehäuse (21) aufweist.

6. Dosiersystem (10) nach einem der vorherigen Ansprüche, **dadurch gekennzeichnet, dass** die Drucklufteinheit (30) ein Schaltventil und/oder ein Druckregelventil (33) und/oder einen insbesondere geregelten Kompressor (35) und/oder einen Luftfilter (34) aufweist.

7. Dosiersystem (10) nach einem der vorherigen Ansprüche, **dadurch gekennzeichnet, dass** die Dosiereinheit (20) zumindest einen Reduktionsmittelfilter aufweist.

8. Dosiersystem (10) nach einem der vorherigen Ansprüche, **dadurch gekennzeichnet, dass** es sich bei der Förderpumpe (22) der Dosiereinheit (20) um eine Inline-Pumpe handelt.

9. Dosiersystem (10) nach einem der vorherigen Ansprüche, **dadurch gekennzeichnet, dass** die Dosiereinheit (20) einen Sensor zur Erfassung des Kolbenaufschlags des Pumpenkolbens aufweist, insbesondere einen Piezokristall.

10. Dosiersystem (10) nach einem der vorherigen Ansprüche, **dadurch gekennzeichnet, dass** die Dosiereinheit (20) ein integriertes Steuergerät aufweist, insbesondere dass die Dosiereinheit (20) einen CanBus-Anschluss aufweist.

11. Dosiersystem (10) nach einem der vorherigen Ansprüche, **dadurch gekennzeichnet, dass** die Drucklufteinheit (30) ein integriertes Steuergerät aufweist, insbesondere dass die Drucklufteinheit (30) einen CanBus-Anschluss aufweist.

## Claims

1. Reductant-metering system (10) for injecting a reductant into the exhaust gas stream of an internal combustion engine for selective catalytic reduction, using a conveyor pump, by means of which reductant is extracted out of a reductant tank (40) via a suction pipe (23) out of the tank (40) and conveyed via a pressure pipe (50) and introduced via at least one nozzle (60) into the exhaust gas stream of the internal combustion engine, wherein the metering system (10) has a compressed air supply and the reductant is nebulised by means of pressurised air externally to the nozzle (60), **characterised in that** the reductant-metering system (10) has a modular construction consisting of at least two integrated components (20, 30), wherein the first integrated component is in the form of a metering unit (20) and has at least the pump, the suction pipe, the pressure pipe and a pressurised air connection, and wherein the second integrated component is in the form of a pressurised air unit (30) and has at least one controlled valve for the regulation of the pressurised air supply, **characterised in that** the pressurised air connection of the metering unit (20) has a magnet valve (25) and/or a check valve (24), in particular that the metering unit (20) is connected via a switch valve or regulating valve with the pressurised air unit (30), in order after the end of the dosing to free from reductant by means of pressurised air the metering unit (20) and/or the nozzle (60), in particular the pump (22), the conveyor pipe (50) and the nozzle.

2. Metering system (10) according to claim 1, **characterised in that** in the metering unit (20) is further integrated at least one pressure sensor for detecting the reductant pressure and/or a temperature sensor for detecting the reductant temperature and/or a flow sensor.

3. Metering system (10) according to claim 1 or 2, **characterised in that** the components (20, 30) have respectively a housing (21, 31) which have the respective connection areas and installation areas, in particular that the housings (21, 31) are respectively formed integrally as injection moulded parts.

4. Metering system (10) according to any of the preceding claims, **characterised in that** the metering system (10) has a reductant tank (40) to which the suction pipe (23) is connected.

5. Metering system (10) according to any of the preceding claims, **characterised in that** the metering system (10) has a reductant tank (40) and the metering unit (20) is installed in the tank (40) and/or flange-mounted on the tank (40), in particular that the metering unit (20) has a frost pressure-proof housing (21).

6. Metering system (10) according to any of the preceding claims, **characterised in that** the pressurised air unit (30) has a switch valve and/or a pressure regulating valve (33) and/or an in particular regulated compressor (35) and/or an air filter (34).

7. Metering system (10) according to any of the preceding claims, **characterised in that** the metering unit (20) has at least one reductant filter.

8. Metering system (10) according to any of the preceding claims, **characterised in that** the conveyor pump (22) of the metering unit (20) is an inline pump.

9. Metering system (10) according to any of the preceding claims, **characterised in that** the metering unit (20) has a sensor for detecting the piston impact of the pump piston, in particular a piezoelectric crystal.

10. Metering system (10) according to any of the preceding claims, **characterised in that** the metering unit (20) has an integrated control device, in particular that the metering unit (20) has a CANbus connection.

11. Metering system (10) according to any of the preceding claims, **characterised in that** the pressurised air unit (30) has an integrated control unit, in particular that the pressurised air unit (30) has a CANbus connection.

## Revendications

1. Système de dosage réducteur (10) pour l'injection d'un réducteur dans le courant de gaz d'échappement d'un moteur à combustion interne pour la réduction catalytique sélective, avec une pompe de refoulement, au moyen de laquelle un réducteur est aspiré d'un réservoir de réducteur (40) hors du réservoir (40) par le biais d'une tubulure d'aspiration (23) et est refoulé par le biais d'une tubulure de pression (50) et est introduit dans le courant de gaz d'échappement du moteur à combustion interne par le biais d'au moins une buse (60), dans lequel le système de dosage (10) présente une alimentation en air comprimé et le réducteur est pulvérisé à l'extérieur de la buse (60) par air comprimé, **caractérisé en ce que** le système de dosage réducteur (10) présente une structure modulaire en au moins deux unités de montage intégrées (20, 30), dans lequel la première unité de montage intégrée est réalisée en tant qu'unité de dosage (20) et présente au moins la pompe, la tubulure d'aspiration, la tubulure de pression et un raccord d'air comprimé et dans lequel la deuxième unité de montage intégrée est réalisée en tant qu'unité d'air comprimé (30) et présente au moins une soupape commandée pour la régulation de l'alimentation en air comprimé, **caractérisé en ce que** le raccord d'air comprimé de J'unité de dosage (20) présente une électrovanne (25) et/ou un clapet antiretour (24), en particulier que l'unité de dosage (20) est raccordée à l'unité d'air comprimé (30) par le biais d'une soupape de commutation ou soupape de régulation pour libérer l'unité de dosage (20) et/ou la buse (60), en particulier la pompe (22), la conduite de refoulement (50) et la buse après la fin du dosage par air comprimé de réducteur.

2. Système de dosage (10) selon la revendication 1, **caractérisé en ce qu'**au moins un capteur de pression pour la détection de la pression de réducteur et/ou un capteur de température pour la détection de la température de réducteur et/ou un capteur de débit est intégré en outre dans l'unité de dosage (20).

3. Système de dosage (10) selon la revendication 1 ou 2, **caractérisé en ce que** les unités de montage (20, 30) présentent respectivement un boîtier (21, 31), lesquelles présentent les zones de raccord respectives ainsi que des zones de montage, en particulier que les boîtiers (21, 31) sont réalisés respectivement d'un seul tenant en tant que pièces moulées par injection.

4. Système de dosage (10) selon l'une quelconque des revendications précédentes, **caractérisé en ce que** le système de dosage (10) présente un réservoir de réducteur (40), auquel la tubulure d'aspiration (23) est raccordée.

5. Système de dosage (10) selon l'une quelconque des revendications précédentes, **caractérisé en ce que** le système de dosage (10) présente un réservoir de réducteur (40) et l'unité de dosage (20) est montée dans le réservoir (40) et/ou est bridée sur le réservoir (40), en particulier que l'unité de dosage (20) présente un boîtier résistant à la pression du gel (21).

6. Système de dosage (10) selon l'une quelconque des revendications précédentes, **caractérisé en ce que** l'unité d'air comprimé (30) présente une soupape de commutation et/ou une soupape de régulation de pression (33) et/ou un compresseur en particulier régulé (35) et/ou un filtre à air (34).

7. Système de dosage (10) selon l'une quelconque des revendications précédentes, **caractérisé en ce que** l'unité de dosage (20) présente au moins un filtre de réducteur.

8. Système de dosage (10) selon l'une quelconque des revendications précédentes, **caractérisé en ce que** la pompe de refoulement (22) de l'unité de dosage (20) est une pompe en ligne.

9. Système de dosage (10) selon l'une quelconque des revendications précédentes, **caractérisé en ce que** l'unité de dosage (20) présente un capteur pour la détection du percuteur de piston du piston de pompe, en particulier un cristal piézoélectrique.

10. Système de dosage (10) selon l'une quelconque des revendications précédentes, **caractérisé en ce que** l'unité de dosage (20) présente un appareil de commande intégré, en particulier que l'unité de dosage (20) présente un raccord CanBus.

11. Système de dosage (10) selon l'une quelconque des revendications précédentes, **caractérisé en ce que** l'unité d'air comprimé (30) présente un appareil de commande intégré, en particulier que l'unité d'air comprimé (30) présente un raccord CanBus.
